(19) Europäisches Patentamt

European Patent Office

Office européen des brevets

(11) EP 1 705 584 A1

(12) **EUROPEAN PATENT APPLICATION**

(43) Date of publication:
27.09.2006 Bulletin 2006/39

(51) Int Cl.:
*G06F 17/30* (2006.01)

(21) Application number: 06000633.5

(22) Date of filing: 12.01.2006

| | |
|---|---|
| (84) Designated Contracting States:<br>AT BE BG CH CY CZ DE DK EE ES FI FR GB GR<br>HU IE IS IT LI LT LU LV MC NL PL PT RO SE SI<br>SK TR<br>Designated Extension States:<br>AL BA HR MK YU | (72) Inventors:<br>• **Plastina, Daniel**<br>  **Redmond, WA 98052 (US)**<br>• **Cain, Jonathan M.**<br>  **Redmond, WA 98052 (US)**<br>• **Novak, Michael J.**<br>  **Redmond, WA 98052 (US)** |
| (30) Priority: 25.03.2005 US 89696 | (74) Representative: **Goddar, Heinz J. et al**<br>**FORRESTER & BOEHMERT** |
| (71) Applicant: **Microsoft Corporation**<br>**Redmond WA 98052 (US)** | **Pettenkoferstrasse 20-22**<br>**80336 München (DE)** |

(54) **Methods, systems, and computer-readable media for generating an ordered list of one or more media items**

(57) A system for generating an ordered list of one or more media items selected from a library of media items. The system comprises a user-associated selection filter for generating a subgroup of media items from the library. The system further comprises a user-associated ordering filter for ordering at least a portion of the subgroup of media items into an ordered list.

FIG. 1

EP 1 705 584 A1

**Description**

**TECHNICAL FIELD**

Embodiments of the present invention relate to the field of generating an ordered list of media items from a collection or multiple collections (i.e., a library or libraries) of media items. In particular, embodiments of this invention relate to methods and systems capable of generating ordered lists of media items, or playlists, based upon a user-associated selection filter and a user-associated ordering filter.

**BACKGROUND OF THE INVENTION**

Due to recent advances in technology, computer users are now able to enjoy many features that provide an improved user experience, such as playing various media and multimedia content on personal, laptop, or handheld computers, as well as cellular phones and other portable media devices. For example, most computers today are able to play compact discs (CDs) and have an internet connection capable of streaming and downloading audio and video so users can listen to their favorite media while working on their computers. Many computers are also equipped with digital versatile disc (DVD) drives enabling users to watch movies.

In some multimedia environments, a computer has access to a computer-readable medium storing media files such as Moving Picture Experts Group audio layer-3 (MP3) files and WINDOWS MEDIA technologies audio (WMA) and video files. The computer typically organizes the media files into playlists when the compressed media files are played on the computer.

Conventionally, users must expend considerable time and energy to build a playlist of media items (e.g., video files, music files, photos, etc.) of any complexity. Media items must be individually selected and added to each playlist. In addition to the effort required, users may also have difficulty constructing a playlist including each of the media items they desire. For example, remembering the name of each particular media item (or artist, genre, creator, creation date, style, etc.) to include in a playlist is difficult. This inability to recall each desirable media item can lead to a user-created playlist that includes only a few common media items familiar to the user. Such a playlist can be mundane, repetitive, and generally not pleasing, even to the user who created it.

The issue of recalling media items of interest is exacerbated with the era of online media libraries, such as for music and other audio, movies and other video, among others. For example, a single user can subscribe to a media service (e.g., a subscription service) having over a million available media items. Such a subscription simply provides too many choices for a single user to review and consider for a playlist.

Beyond inadequate time and inability to recall particular media items, other issues may also discourage particular users from authoring their own playlist. For example, a user who is not particularly computer savvy may not realize such a subgroup of his particular collection or multiple collections (i.e., a library or libraries) may be created. Others may simply not have the knowledge about the media to make such a playlist. Such users still have preferences about media and display strong opinions when exposed to different media items, even though they have little idea who wrote or is performing such items. Broadcast radio caters to such listeners by programming the listening experience according to a particular listening genre, such as easy listening, jazz, rhythm and blues, country, rock and roll, etc.

Unfortunately, these issues are not addressed by any conventional system. Conventional techniques provide only limited amounts of assistance to the user in creating playlists, such as sorting by media type or artist. Such conventional techniques provide no automatic playlist formation based upon filters set by the user or determined based upon user behavior with respect to a playlist. Conventional techniques also require disclosure of much personal information from the user to a server so that the server can build the playlist. Because such information is personal, it is more desirable to retain such user information at the client, rather than the server. There is a need, therefore, for a system or method capable of generating a playlist of media items tailored to a user's needs that continuously updates based upon new user preferences and behavioral feedback stored upon a user's device. In other words, the system or method assists the user in media item (e.g., music) selection. Accordingly, a solution that enables playlist creation based upon filters directly or indirectly set by a user is desired.

**SUMMARY OF THE INVENTION**

Accordingly, a method (or a system) for generating an ordered list of one or more media items selected from a library of media items is desired to address one or more of these and other disadvantages. The method comprises selecting a subgroup of media items from the library according to a user-associated selection filter and ordering at least a portion of the subgroup of media items into an ordered list according to a user-associated ordering filter. For example, embodiments of the invention may be well-suited for providing assistance to users in creating a highly sophisticated and responsive playlist with a minimum amount of effort on the part of the user. Advantageously, aspects of the present invention permit creating of playlists based upon both user selections and user behavioral feedback.

In one aspect of the invention, a system for generating an ordered list of one or more media items selected from a library of media items is disclosed. The system comprises a user-associated selection filter for generating a subgroup of media items from the library and a user-associated ordering filter for ordering at least a portion of the subgroup of media items into an ordered list.

In another aspect of the invention, a method for generating an ordered list of one or more media items selected from a library of media items is disclosed. The method comprises selecting a subgroup of media items from the library according to a user-associated selection filter and ordering at least a portion of the subgroup of media items into an ordered list according to a user-associated ordering filter.

In still another aspect of the invention, a computer-readable medium having computer-executable instructions for generating an ordered list of one or more media items selected from a library of media items is disclosed. The computer-executable instructions for performing the steps comprises selecting a subgroup of media items from the library according to a user-associated selection filter and ordering at least a portion of the subgroup of media items into an ordered list according to a user-associated ordering filter.

Alternatively, the invention may comprise various other methods, systems, computer-readable media, and apparatuses.

Other features will be in part apparent and in part pointed out hereinafter.

## BRIEF DESCRIPTION OF THE DRAWINGS

Fig. 1 depicts a system of the present invention for generating an ordered list of one or more media items;

Fig. 1A is an exemplary screenshot of a user interface for a playlist of musical media items;

Fig. 2 depicts the details of the playlist engine of the system of Fig. 1; and

Fig. 3 is a block diagram illustrating one example of a suitable computing system environment in which the invention may be implemented.

Corresponding reference characters indicate corresponding parts throughout the drawings.

## DETAILED DESCRIPTION OF THE INVENTION

### System for Generating an Ordered List of Media Items

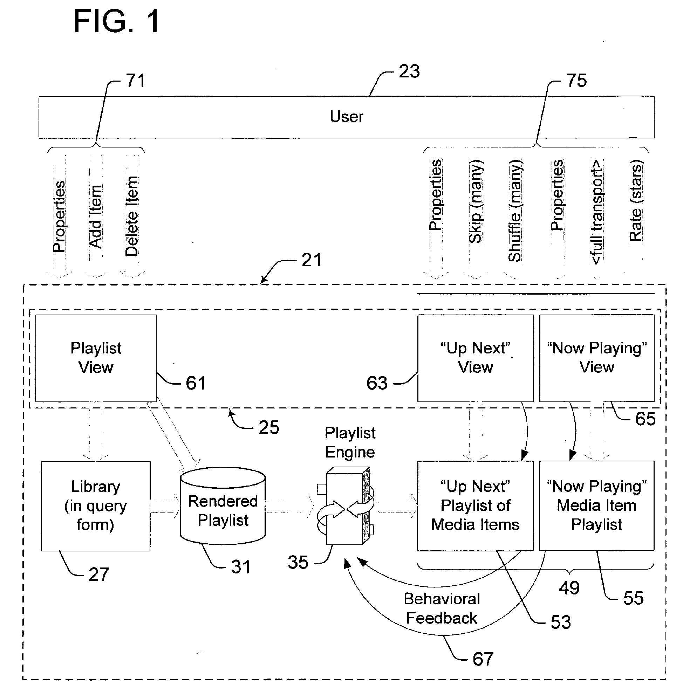

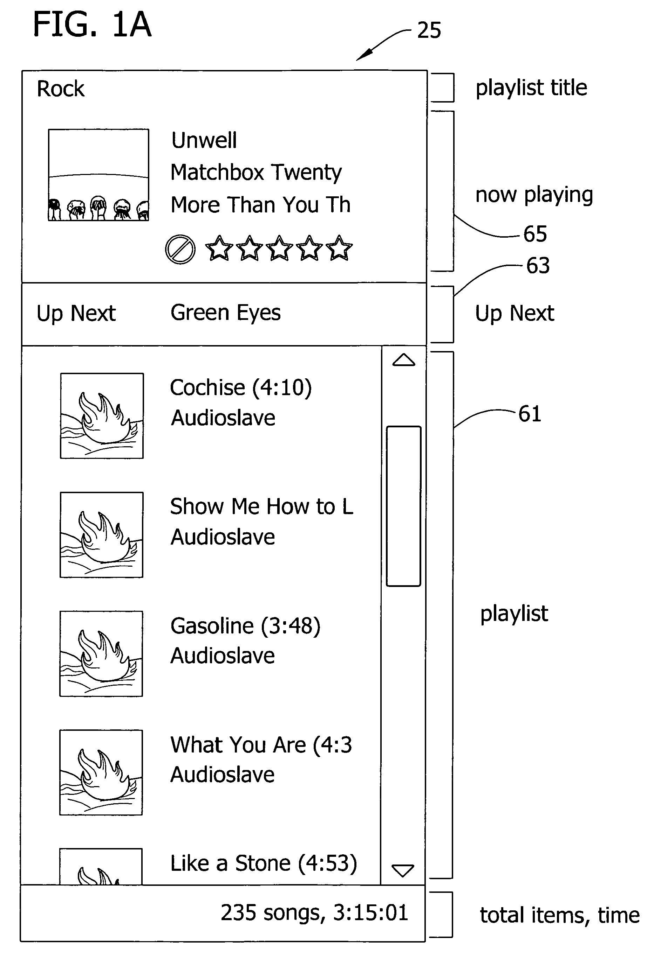

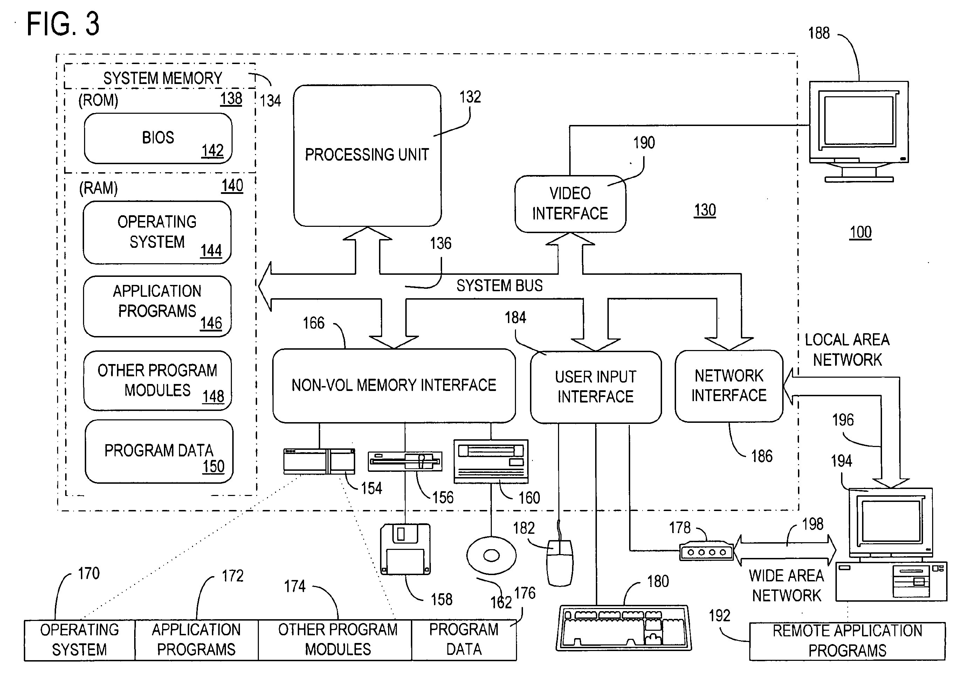

Referring now to Fig. 1, a system, generally indicated at 21, is disclosed for generating an ordered list, or playlist, of one or more media items selected from a collection or multiple collections (i.e., a library or libraries) of media items and ordered for consumption by a user 23. As used herein, the term playlist means an ordered list of media items for a user 23 to play (in the case of music or video) or access (in the case of images or text files). As used herein, the term media item comprises media files of multiple formats, including, music, speeches, audio books, news reports, movies, television shows, comedy routines, photos, home videos, online media items, music videos, movie trailers, audio blogs, live radio stations, among others. In one example, the user 23 may utilize a media player program on a computer 130 (*see* Fig. 3) to access the library of media items via the playlist. An example of such a media player is the Windows® Media Player by Microsoft Corporation of Redmond, Washington.

The system 21 depicted in Fig. 1 comprises several components, including a user interface, generally indicated 25, for communicating information to the user 23 and receiving instructions from the user, a library 27 of media items in query form, a rendered playlist 31, and a playlist engine 35. The details of each of these components are addressed in greater detail below.

In particular, the library 27, which may comprise single or multiple collections, either stores a number of media items for use by the user 23 (e.g., on a local computers) or provides a listing of what media items are available along with how to access such media items (e.g., data links to a collection spread across a network or the internet) for use by a user. In one example, the media items contained in the library 27 are defined by the user 23. Such a library may be stored on a user's computer 130 (*see* Fig. 3), a portable media playing device (e.g., an MP3 player), a storage device (e.g., a flash memory device), or virtually any other data source. In another example, a service provider (e.g., a subscription service) maintains a large library 27 of media items at a separate storage facility (e.g., a server) for streaming to the user 23 upon request. In yet another example, the library 27 may be defined by both a user's personal library of media items and the media items provided by a service provider. In any case, however, the library 27 acts as a repository for media items of potential of interest to a user 23. Such libraries 27 of media items may be very large, containing many tens, hundreds, thousands, or millions of media items, making them difficult to organize into meaningful playlists without substantial effort.

Once access to a library 27 of media items is established via the user interface 25, the library of media items may be further processed into the rendered playlist 31. The rendered playlist comprises a portion of the media items from the library 27, and constitutes a first rough selection of a portion of the media items from the library. For example, conventionally, a library 27 of media items may be reduced to a rendered playlist 31 by choosing only those media items satisfying one or more basic criteria, such as a common genre or a common creation year, among others. Rendering a playlist comprising a portion of a library 27 based upon basic sorting criteria is well known in the art. Although such a first rough selection may be employed to reduce the number of media items under consideration by the playlist engine 35, in one example this reduction may be skipped, whereby the rendered playlist 31 contains all of the media items from the library 27.

It should be noted here that rendered playlist 31 created by the present system 21 is not fixed, but rather has the capacity to change over time. In one example, a rendered playlist 31 of images is created by querying only those images created with a date equal to "today." Images created before today are not included in the rendered playlist 31. Thus, the membership of media items within such a rendered playlist 31 will change as the date changes. In addition, another example of the system 21 provides a change notification to the user 23 when the rendered playlist 31 is updated, such that the user is aware that the playlist engine 35 is receiving a revised rendered playlist.

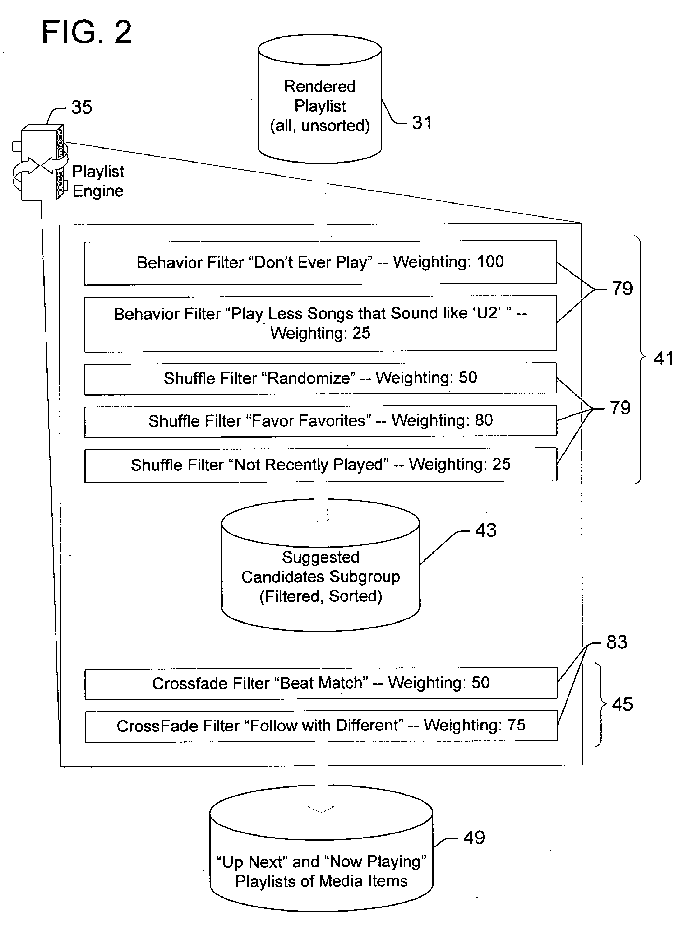

The rendered playlist 31 is forwarded to the playlist engine 3 5 as input for the playlist engine. The playlist engine 35 considers each media item of the rendered playlist 31 to determine if the media item will be part of the playlists of media items delivered to the user 23 via the user interface 25. As will be discussed in greater detail below, the playlist engine 35 includes a user-associated selection filter 41 and a user-associated ordering filter 45 *(see* Fig. 2) for determining the output of the engine. (As used herein, the term "user-associated" means pertaining to the preferences of a particular user 23.) After consideration of the media items of the rendered playlist 31, the playlist engine 35 produces a playlist 49 of media items passing through the filters 41, 45 included in the engine. The playlist 49 comprises two unique playlists, an "Up Next" playlist 53 and a ''Now Playing" playlist 55, as discussed in more detail below. In particular, the playlist engine 35 selects which of the media items of the rendered playlist 31 will be placed on the playlist 49. In other words, the playlist engine 31 acts as a processor of the rendered playlist 31 of media items.

As introduced above and depicted in Fig. 1, the user interface 25 communicates with the user 23 by providing a listing of the contents of the playlist 49. The user interface 25 supports various formats for viewing the media items of the playlist 49 and the library 27. In the example shown in Figs. 1 and 1A, the user interface 25 is divided into three areas, a playlist view 61, an "Up Next" view 63, and a ''Now Playing" view 65. The "Up Next" view 63 of the user interface 25 displays at least a portion of the "Up Next" playlist 53 of media items so that the user 23 can see what media items are upcoming. The "Up Next" view 63 of the "Up Next" playlist 53 includes at least the next media item scheduled to be accessed, but may include several of the media items of the "Up Next" playlist 53. Similarly, the "Now Playing" view 65 of the user interface 25 displays the media item currently accessed, or played, by the user 23. As would be readily appreciated by one skilled in the art, other user interfaces 25 are contemplated as within the scope of the claimed invention.

As introduced above, the user interface includes two partial playlists: the "Up Next" playlist 53 and the "Now Playing" playlist 55. The "Up Next" list can include several media items (e.g., 10), while the "Now Playing" list includes a single media item, the one currently playing on the media player. These playlists 53, 55 are comprised of some of the same media items found in the library 27, with the following specific constraints. When the media item of the ''Now Playing" playlist 55 plays to completion, the "Now Playing" playlist changes to include the next media item from the "Up Next" playlist 53. The "Up Next" playlist is then updated to remove the media item now featured in the "Now Playing" playlist 55. Moreover, each of the remaining media items in the "Up Next" playlist 53 is advanced one place ranking, and another media item is added to the end of the "Up Next" playlist. The "Up Next" playlist 53 can include any number of media items, and in one example is a list of between about 3 and about 10 media items. Not all of the media items included in the "Up Next" playlist 53 need necessarily be included in the "Up Next" view 63, although in one example the playlist and the view share the same media items. The "Up Next" playlist 53 and "Up Next" view 63 change each time a media item is removed or if the playlist engine 35 instructs the "Up Next" playlist to change its contents, as will be discussed in detail below. In other words, the "Up Next" playlist 53 is an on-demand, dynamic listing of media items generated by the playlist engine 35.

Moreover, the user interface 25 can provide properties relating to the media items of the library 27 and playlists 53, 55 to the user 23, including the number of media items in a respective library or playlist, the duration of each individual media item, and other properties of the media items in the library and playlists. In addition to the data provided to the user 23 by the user interface, the user may also influence the actions of the playlist engine 35 and exercise some control over the system by providing some behavioral feedback 67 regarding preferences. Generally, the user interface 25 provides basic playlist manipulation commands, such as the ability to manually add or delete one or more media items from the library 27 or playlists 53, 55. In particular, the user 23 can interact with the playlist view 61 of the user interface 25 via input channels 71, which provide the ability to add media items to the library 27, delete media items from the library, and modify the properties (e.g., metadata) of the media items. The user 23 can also interact with the "Up Next" view 63 and the "Now Playing" view 65 of the user interface 25 via input channels 75, which provide the ability to modify the properties of the media items in the "Up Next" view and the "Now Playing" view, skip one or more media items in the "Up Next" view, shuffle the media items in the "Up Next" view, provide full transport of the currently played media item (i.e., play, stop, pause, forward, back, seek forward, seek back, mute, etc.), and rate the media item of the "Now Playing" view. As would be readily understood by one skilled in the art, other input channels are contemplated as within the scope of the present invention.

**Playlist Engine**

Referring now to Fig. 2, the details of the playlist engine 35 will be described. The playlist engine 35 of the system 21 comprises a user-associated selection filter 41 for generating a subgroup 43 of media items from the rendered playlist 31 based upon the selection filter. As noted above, the term "user-associated" means pertaining to the preferences of a particular user 23. In other words, the filters 41, 45 of the playlist engine 35 are particularly tuned to capture the preferences of a particular user 23 and use those preferences to dictate the content and form of the playlists 53, 55. The user-associated selection filter 41 can be configured as a function of user 23 selection of filter parameters, user behavior determining filter parameters, or as a combination of both user selection and user behavior. In particular, user behavior may comprise user 23 actions relating to one or more of selecting, accessing, and playing the media items in the media player.

More particularly, the user-associated selection filter 41 may comprise two or more filters 79. In the embodiment shown in Fig. 2, five filters 79 are included. Each of the filters 79 is assigned a weight, whereby each filter impacts the filtering of the media items according to its relative weight. The weighted filters 79 of the user-associated selection filter 41 score each media item of the rendered playlist 31, whereby the subgroup 43 is generated based upon the score of each media item in the rendered playlist. In one example, the user-associated selection filter 41 comprises at least one of a null filter, a content filter, and a frequency filter. The null filter has no affect on the weighting and allows all media items to pass through the selection filter 41. Such a null filter is useful for a user 23 seeking to allow the entire rendered playlist 31 to pass through the playlist engine 35 to the subgroup 43. A content filter included with the selection filter 41 filters each media item according to its content (e.g., genre, artist, etc.). In some cases, a content filter may remove a particular media item from further analysis by the playlist engine 35 altogether. Such a filter 79 is considered a binary filter because it allows for only two results, filter out the media item or keep the media item. For example, a filter 79 like "Don't Ever Play Frank Sinatra" would immediately filter out any media item performed by Frank Sinatra, even if all of the other filters would have scored the media item well and allowed it to be part of the subgroup 43. Finally, frequency filters included with the selection filter 41 determine how often particular media items should be repeated in the subgroup 43 according to the desired frequency of play. A frequency filter can increase the number of times a desirable media item is played and decrease the number of times a less desirable media item is played. As would be readily understood by one skilled in the art, other filter classes beyond the null, content, and frequency classes noted above are contemplated as within the scope of the claimed invention.

In addition to the user-associated selection filter 41 described above, the playlist engine 35 of the system 21 also comprises a user-associated ordering filter 45 for ordering at least a portion of the subgroup 43 of media items into an ordered list, or playlist 49 (e.g., the "Up Next" playlist 53 and the "Now Playing" playlist 55). As with the selection filter 41, the user-associated ordering filter 45 may comprise two or more filters 83. In the embodiment shown in Fig. 2, two filters 83 are included. Each of the filters 83 of the user-associated ordering filter 45 is assigned a weight such that each of the two filters impacts the filtering of the media items according to its relative weight. The two weighted filters 83 of the user-associated ordering filter 45 score each media item of the subgroup 43. Thus, at least a portion of the media items of the subgroup 43 are arranged into an ordered playlist 49 based upon the score of each media item in the subgroup. The playlist engine 35 exports this ordered playlist 49 to the user interface 25 as the "Up Next" playlist 53 and the "Now Playing" playlist 55.

It is important to note that not all of the media items in the subgroup 43 need to be ordered in the "Up Next" playlist 53. For example, if the subgroup 43 contains 1000 media items, it is not necessary to order each of those media items into a playlist that could number in the millions of media items, once repeating media items are considered. Instead, the present system 21 evaluates each media item according to the filters 41, 45 discussed above and places those media items having the highest scores in the "Up Next" playlist 53. The media items in the "Up Next" playlist 53 are continuously reevaluated to ensure that the playlist includes those media items most appropriate based upon the filters 41, 45. In this manner, the playlist engine 35 need not order an entire playlist each time it reevaluates the contents of the "Up Next" playlist 53. Instead, the playlist engine 35 evaluates each of the media items in the rendered playlist 31 as a potential candidate for the "Up Next" playlist 53, and then only orders the portion of the media items that will make up the "Up Next" playlist.

As with the filters 79 of the user-associated selection filter 41, the user-associated ordering filter 45 may comprise at least one of a null filter, a media item matching filter, and a listening experience filter. The null filter has no affect on the weighting and allows all media items of the subgroup 43 to remain in the same order. The media item matching filter seeks to promote a particular relationship between adjacent media items in the "Up Next" playlist 53. This relationship can be one of many, including placing similar media items adjacent one another in one example, or placing dissimilar media items adjacent one another in another example. Finally, any number of listening experience filters may be included to shape the overall listening experience for the user 23. Such filters can intentionally alter the mood or genre of the listening experience over time, control the tempo of adjacent media items to create a pleasant transition between media items, or order very different media items adjacent one another to create an eclectic, or unorthodox listening experience. Other media item matching filters and listening experience filters beyond the null, media item matching, and listening experience filters discussed above are also contemplated as within the scope of the claimed invention.

In use, the selection filter 41 is adapted to continuously regenerate the subgroup 43, and the ordering filter 45 is adapted to continuously reorder at least a portion of the subgroup while at least one of the media items in the ordered subgroup is accessed by the user 23. Any changes to the filter membership, filter ordering, and/or filter weighting of the selection filter 41 and the ordering filter 45 (such as by user input or monitored behavioral feedback) will initiate a re-evaluation of the "Up Next" playlist 53. A similar re-evaluation will occur if the user provides any feedback 67 or otherwise alters his preferences for particular media items during playback. In one example, a user lowering the rating of a media item in the "Up Next" playlist 53 from five stars to two stars may cause the playlist engine 35 to remove the downwardly rated media item from the "Up Next" playlist. In addition to responding to user 23 input, the playlist engine 35 also may regenerate and reorder at a regular interval not necessarily associated with user input, such as after each media item is played and the next media item is moved from the "Up Next" playlist 53 to the "Now Playing" playlist 55. In yet another example, the reevaluation may occur at a periodic interval controlled by the user 23 or the system 21 (e.g., show photo media items at a particular time each day). Regular reevaluation helps ensure that the playlists 53, 55 remain consistent with the preferences of the user 23. In another example, these updating features may be turned off during playback, such that the updating of the subgroup 43 only occurs between playback sessions.

Referring again to Fig. 2, the specifics of an exemplary playlist engine 35 are depicted in greater detail. The playlist engine 35 includes a list of filters 79, 83 arranged as the selection filter 41 and the ordering filter 45, as discussed above. The selection filter 41 suggests media items for playback by filtering out those media items deemed less desirable for the present playlists 53, 55 according to the set of filters 79. Importantly, it is common that not all of the media items in the rendered playlist 31 be suggested for playback by the playlist engine 35. The ordering filter 45 determines the order in which the media items of the subgroup 43 are actually played. In other words, the first filtration step selects the media content, and the second filtration step sorts the media content. The result is a deliberately selected and ordered playlist 49 of media items selected for playback.

As discussed above, the filters 79, 83 provide the playlist engine 35 with a recipe for selecting and ordering media items. Any number of individual filters 79, 83 may be utilized without departing from the scope of the claimed invention. In one example depicted in Fig. 2, the selection filter 41 comprises five filters 79 weighted as depicted in the following table:

| Filter Type | Filter Action | Filter Weight |
|---|---|---|
| Behavior Filter | "Don't Ever Play" | 100 % |
| Behavior Filter | "Play Less Songs that Sound like 'U2'" | 25 % |
| Shuffle Filter | "Randomize" | 50 % |
| Shuffle Filter | "Favor Favorites" | 80 % |
| Shuffle Filter | "Not Recently Played" | 25 % |

Each of these filters 79 has a distinct purpose. The purpose of the "Don't Ever Play" filter 79 is to block particular media items from passing through the playlist engine 35 altogether, irrespective of how other filters may score the media items. In one example, such a filter may be embodied as a field denoted "don't play" in a database. The purpose of the "Play less songs that sound like U2" filter 79 is to weigh down, or filter out, media items that sound like U2, thereby favoring media items that do not sound like the artist U2. The "Randomize" filter 79 is included to increase the variety of media included in the "Up Next" playlist 53. The "Favor Favorites" filter 79 is defined to bias playback of media items based upon their user star rating. In one example, such a filter 79 will play five star rated media items five times for each full play of the playlist, four times for the four star content, three times for the three star content, two time for two star media items, and once for one star media content. For an exemplary group of five media items A, B, C, D, and E, each having a different rating of five to one stars, respectively, such a filter 79 will create a playlist of the five media items whereby each media item is played the number of times corresponding to its rating. For example, the filter 79 will generate the following subgroup 43 of unordered media items A-A-A-A-A-B-B-B-B-C-C-C-D-D-E to be played as part of the playlist. Under such a scheme, the system 21 plays the more highly rated media items more often, which should be more pleasing to the user 23. As the number of media items increases from five, to twenty, to several hundred, the time duration between repetition of a particular highly rated media item increases, which is also more pleasing to the user 23. Finally, the "Not Recently Played" filter 79 will score those media items not recently played more highly than those recently played to help avoid undue repetition, which may be undesirable to a user 23.

Using the above exemplary filters 79, consider the following examples. In a first example, the media item from the rendered playlist 31 is the song "Come Fly With Me" performed by Frank Sinatra. Previously, the system 21 had identified the media item "Come Fly With Me" as a "Don't Ever Play" media item. This identification may be based upon an explicit user selection, a low user rating of the media item, or an inference from previous user behavioral feedback 67 with respect to the media item (e.g., user always skips "Come Fly With Me"). Because the "Don't Ever Play" content filter is binary in nature, the playlist engine 35 will not evaluate the media item further, thereby filtering out "Come Fly With Me" from the subgroup 43.

In another example, the media item "The Stand" performed by the artist "The Alarm" is included in the rendered playlist 31 and forwarded to the playlist engine 35 for consideration with respect to the five filters 79 of the selection filter 41. In this case, the media item "The Stand" is not included in the "Don't Ever Play" filter 79, so the score for this filter is 100. The song "The Stand," however, sounds similar to the artist U2, so the second filter 79 generates a relatively low score of 17, out of 100, for this filter. In other words, this media item is more similar to U2 than 83 % of the other media items under consideration. Perceived similarity between two musical media items may be readily determined by employing known music comparison techniques, such as those discussed in U.S. Patent No. 6,545,209, assigned to Microsoft Corporation of Redmond, Washington. Next, the media item "The Stand" is compared with the other songs recently played and awarded a randomness score of 23, out of 100, indicating that inclusion of this media item will preserve the randomness of the playlist better than 77 % of the other media items in the rendered playlist 31. The following table lists the remaining scores for "The Stand", along with the scores of other media items B, C, D, and E under consideration by the playlist engine:

| Filter | Media Item | | | | | Weight |
| --- | --- | --- | --- | --- | --- | --- |
| | The Stand | B | C | D | E | |
| "Don't Ever Play" | 100 | 100 | 100 | 100 | 100 | 100 % |
| "Play Less Songs that Sound like 'U2'" | 17 | 55 | 67 | 45 | 85 | 25 % |
| "Randomize" | 23 | 50 | 43 | 65 | 54 | 50 % |
| "Favor Favorites" | 50 | 30 | 90 | 70 | 30 | 80 % |
| "Not Recently Played" | 55 | 60 | 52 | 75 | 80 | 25 % |
| Total Score | 169.5 | 177.75 | 223.25 | 218.5 | 192.25 | *Maximum Possible Score 280* |
| Centile Rank | 61 | 63 | 80 | 78 | 69 | |

The playlist engine 35 scores each media item with respect to each filter 79. In the case of the media item "The Stand," scores of 100, 17, 23, 50, and 55 are returned for each respective filter 79. These scores are then weighted and added together as follows, yielding a total score of 169.5:

$$\text{Total Score} = 100 \times 100\,\% + 17 \times 25\,\% + 23 \times 50\,\% + 50 \times 80\,\% + 55 \times 25\,\% = 169.5$$

Each of the other media items B, C, D, and E is similarly scored, the results of which are depicted in the table. Once a score for each of the media items is calculated, the scores may be compared in a number of ways. In one example, each of the media items is assigned a centile ranking based upon the percentage of its respective weighted score divided by the maximum possible score. In the present example, the maximum possible score is 280, whereby the highest scoring media item (i.e., item C) is awarded a centile rank of 80, by taking its score of 223.25 and dividing by the maximum possible score of 280. Thus, in the example noted above, media item C is awarded a centile rank of 80, the media item "The Stand" is awarded a centile rank of 61, and the remaining three media items are awarded scores of 63, 69, and 78, depending upon each of their relative scores. In one example, those media items surpassing some minimum threshold centile ranking will be included in the suggested candidates subgroup 43. In another example, each of the media items is passed to the ordering filter 45, where the previously calculated content scores are combined with the additional scoring related to ordering.

In another example, the individual scores for each of the filters 79 may not be aggregated together into a single total score as described immediately above. In particular, it may be desirable to maintain one or more filters 79 in one or more groups separate from the other filters. For example, by combining all of the filters 79 into a single total score as discussed above, scores for different filters may effectively cancel each other out, such that two media items may receive similar scores, but for very different reasons. Controlling filter weighting, as discussed above, is generally effective for enhancing the importance of particular filters over others. But in addition to such weighting, particular filters or types of filters may be removed entirely from the total score calculation, such that the impact of those individual filters is not lost in the aggregation of the total score. The playlist engine 35 may then review both the total score for the combined filters, and the individual scores for the non-combined filters. Such a segregation of particular filters ensures that information associated with such filters is not marginalized due to the aggregation of data from many filters. For example, separating the filters associated with "liked" and "disliked" media items may provide additional information to the playlist engine 35. With two media items that would be scored similarly according to the aggregation method described above, but where one has been specifically selected as disliked, the playlist engine can select and order the media item that is "disliked" below the media item of the same score, but that is not "disliked." This enhances the sensitivity of the playlist engine 35, allowing greater selectivity between similarly scored media items. In another example, each of the media items is aggregated, as described in detail above, and then those media items having similar scores (e.g., scores within $\pm10$ centile rank) are considered again in view of one or more individual filters of particular importance (e.g., "dislike") that may further select and order the media items of similar score.

Similar calculations apply to the ordering filter 45 for sorting the media items of the suggested candidates subgroup 43. In particular, initial ordering of the suggested candidates subgroup 43 by the system 21 includes selection of a seed media item deemed first in the ordered playlist 49, to which all other media items are compared. The seed media item can be intelligently generated using the results of the installed filters that do not rely upon comparison of adjacent media items in the ordered playlist 49, as there is not yet an ordered playlist. For example, the "Beat Match" filter depicted in Fig. 2 is adapted to ensure that the media items selected by the selection filter 41 are sequenced such that the end tempo of the currently playing media item is similar to the starting tempo of the media item next selected for playback.

It is also worth noting that the filters 79, 83 of the playlist engine 35 may take into account behaviors and preferences on a per user basis. For example, one configuration of the playlist engine 35 used by a first user and another configuration of the playlist engine used by a second user may yield different results, even when the libraries 27 are the same. This is because some filters 79, 83 may consider per-user data, such as per-user playcounts, cited preferences, and demographic information used by auto-rating systems, etc.

It should be readily apparent to one skilled in the art that other scoring and weighting algorithms may be used without departing from the scope of the claimed invention. In particular, normalized scores (such that scores between results from different combinations and numbers of filters may be compared), un-weighted combinations, and combinatorial values. For example, a combinatorial filter may increase its own weight when used in combination with another filter (e.g., a "Play more songs that sound like" filter). Alternately, if several other filters are used (e.g., several "Play less songs that sound like" filters), the weight of the combinatorial filter may be decreased.

In another example, the system 21 may offer the user 23 a selection element (not shown) providing the user with an opportunity to "Save as would be played." This option saves the ordered playlist 49 of media items for the user 23, whereby the user may be able to utilize the ordered playlist at another time on the system 21, or with another media player not capable of reordering the subgroup during playback according to the invention disclosed herein (e.g., a portable media player (Rio Carbon player by Digital Networks North America, Inc. of Santa Clara, California, Ipod by Apple of Cupertino, California) or a streaming digital media player (Roku Soundbridge by Roku)). When using the ordered playlist 49 on another media player not utilizing the ordering features of the system 21 discussed herein, however, the ordered playlist will simply be played in the order the media items were ordered at a single point in time, without the benefit of reordering discussed herein.

**Filter Mappings for Generating an Ordered List of Media Items**

The filters 79 of the selection filter 41 may be of various types, including the following filters with corresponding explanations of their uses:

| SELECTION FILTER | SELECTION FILTER ACTION |
|---|---|
| Album-based | Make selection Album-based, rather than media item-based via averaging filters over the album for the overall album rating. |

(continued)

| SELECTION FILTER | SELECTION FILTER ACTION |
|---|---|
| Avoid speech/comedy media items | If possible to detect in media item, bias against those media items that do not have backing music (mono, low bit rate, narrow frequency band, etc.) |
| Bias by current date | Select the next media item based upon the current date and the release date of the media item (as well as well-known seasonal music). |
| Bias by day of week | Select media items that are commonly played on this day of the week. Use weekend vs. weekday playcount in the media player. |
| Bias by favorite content | Play favorite content more often than not. Relies upon star ratings (user, community, service-provided, or playcount generated). |
| Bias by household favorites | Favor media items that others on the same computer like (or favor away from those media items). |
| Bias by manual user avoidance | Favor against media items that sound like the last N media items the user manually showed dislike to (implicitly or explicitly). |
| Bias by manual user selection | Favor media items that sound like any of the last N media items the user manually selected to play (more closely match the style the user is looking for). |
| Bias by play popularity | Play content that has a higher playcount. Source data comes from community, service-provided, or playcount generated. |
| Bias by time of day | Selects media items that are commonly played at this time of the day. Uses morning/afternoon/evening/night playcount in the player |
| Burning Burning | Favor media items (or bias against) that user has picked to burn to a redbook CD. |
| Does not sound like Does not sound | Uses artist similarity vectors to prevent selection of music like similar to a given artist |
| Exclude holiday music | General filter that removes holiday music from media item selections (e.g., fixed metadata keyword searches on key fields). |
| Greatest hits mode - album | Include only the top N media items from each album that meet "good" criteria. |
| Greatest hits mode - artist | Include only the top N media items from each artist that meet "good" criteria. |
| Library compendium CDs | Builds a series of sequential playlists, each the maximum allowed for redbook audio CDs, which provides short samples of every media item in the library for burning to a CD. |
| Library samplers | Builds a playlist that is the maximum that will fit on a Redbook audio CD (99 media items) that contains sample snippets of as broad a selection of the library as possible. A library with 99 media items would have all of them, while a library with 198 media items would try to pull a complete representative sample from half of them (rather than the first 99 in some flat list). |
| Not recently played | Prevents something recently played from being played again. Most important on very large playlists (e.g.: Genre = rock) |
| Same energy | Seeks to match energy of a media item (e.g. Aerosmith rock ballad seed media item, do not add death metal media items). Uses DSP produced Hi/med/low output value from CD ripping process or metadata download. |
| Same era | Plays content within known musical periods as defined by inflection points within music industry (fixed metadata: e.g.: Flappers = 20s) |
| Same genre | Use genre field to bias music selection to be within a given genre. |
| Same mood | Use genre field to bias music selection to be within a given mood. |
| Skip one star rated media items | Skip media items having a one star rating. |

(continued)

| SELECTION FILTER | SELECTION FILTER ACTION |
|---|---|
| Skip parental rating | Skip media items that have a non-friendly parental rating (a switch to switch the media player into a "clean" mode). |
| Skip sound-bytes | Favor heavily away from things that don't look like simple songs (e.g., short clips, or very long sets). Potentially other triggers as well. |
| Media items not device-based | Favor media items that are (or are not) on my device (e.g., in my library). |
| Sounds like | Uses artist similarity vectors to ensure selection of music similar to a given artist |
| User action bias filter | Inclusion percentage based upon an overall user bias field discerned from multiple potential user actions: (e.g.: play count, media item skips, increasing the volume, explicitly double-clicking on a media item, frequently playing from an album/ genre/artist/mood, and any other user-biases discerned). This includes biasing towards what is believed to be desirable and away from what is believed undesirable based upon the data. |

One skilled in the art would readily understand that other filters 79 may be utilized without departing from the scope of the claimed invention.

The ordering filters 83 may be of various types, including the following filters and corresponding explanations of their uses:

| ORDERING FILTER | ORDERING FILTER ACTION |
|---|---|
| Artistic Filter | Attempts to create an entirely new and interesting music experience by playing and replaying subsections of media items, interleaving portions of different media items |
| Kid Filter A | Plays favorite media items over and over but tries to drag in new choices occasionaly to widen the child's taste |
| Kid Filter B | (Variation on Kid Filter A) Does not automatically play media item multiple times, but rather plays favorite (often the first media item selected) and then queues another media item for playback after. If the child runs over and hits Previous, then we know they didn't like what we had queued, so we try something else. If they eventually let the second media item play without hitting Previous, we rate it as a tentative new favorite |
| Kid Filter C | Shuffles kids music and allows certain media items to be played only N times per day |
| Kid Filter D | Shuffles kid music (or any genre, artist, or sub-filter selected) for preselected length of time (say 30 minutes), lowering the energy of the media items and the actual player volume in an effort to lull them to sleep |
| Library Preview | Randomizes as thoroughly as possible across all vectors (artist, genre, etc) and plays 15 second clips of each media item until the user hits the Previous button to return to one that sounded interesting, at which point it switches to the default shuffle filter (or a previous shuffle filter, or a filter that is focused on the genre/release date/etc of the "interesting" media item picked out by the user. |
| Balance Artists | Attempts to balance the Artist ratio being output (thus allowing collections heavily biased with a single artist to not have that artist dominate all playback) |
| Bias by Current Time | Picks the next media item (e.g., song or photo) based on the time of day and your listening habits of that time of day. Note this is fundamentally different from a selection filter because it re-evaluates the current time as it runs. Sort of an auto-radio station. |

(continued)

| ORDERING FILTER | ORDERING FILTER ACTION |
| --- | --- |
| Discography order | When picking media items, it seeks to pick the oldest (or newest) media items first for each artist. Different than a global "year released" shuffle order because this will still mix up the artists. |
| Don't follow with similar media item | Uses artist similarity vectors to ensure that the next artist is not overly similar to what's currently playing |
| Double-Shots | Force back-to-back tracks from the same artist in the output order and then change artists. |
| Follow with similar | Uses artist similarity vectors to ensure that the next artist is similar to what's currently playing |
| Follow with similar era | Allow year changes, but bias towards years near what is playing (don't let the time period change too quickly) |
| FollowWithNextTrack OnAlbum | Offers a steep preference to the other tracks on the same album (when present) in track order (when possible) |
| Not Recently played | Prevents something recently played from being played again. Helps prevent start/stop of a playlist from recomputing poor shuffle behavior |
| Not Recently played Artist | Prevents the same artist from being continually played (keeps distance between artists just as you would between playing the same track again). |
| Old -vs- New | Attempts to pick the next media item such that the artist similarity vectors are similar, but the year released is as dissimilar as possible. |
| Pure Shuffle | It's really an "accurate shuffle" -- Randomize once, play all media items once; repeat as needed |
| Random Shuffle | Fully random shuffle (repeat some media items before all play, but many users like the random effect over a pure shuffle) |
| Release Year | Favors playing back music in the order of release year. |
| Tempo Match. | Attempts to pick the next media item such that it matches the end tempo of currently playing media item with beginning tempo of new media item |

One skilled in the art would readily understand that other selection and/or ordering filters 41, 45 may be utilized without departing from the scope of the claimed invention.

**Methods for Generating an Ordered List of Media Items**

The present invention further comprises methods for generating an ordered list of one or more media items selected from a library of media items is disclosed. The method comprises selecting a subgroup of media items from the library according to a user-associated selection filter. The method additionally comprises ordering the subgroup of media items into an ordered list according to a user-associated ordering filter.

In one example, the method further comprises configuring each of the filters as a function of user selection of filter parameters, user behavior determining filter parameters, or a combination of both.

The method also comprises repeating at least one of the selecting and ordering discussed above in response to at least one of user selection of filter parameters and user behavior determining filter parameters. The method also comprises displaying at least a portion of the ordered list on a user interface.

In another example, each of the user-associated selection filter and the user-associated ordering filter of the method comprises two or more filters. Each of the selecting and ordering additionally comprises filtering each of the media items with the two or more filters, assigning a weight to each of the two or more filters, and scoring each media item of the library according to the weighted filters. The subgroup is generated based upon the score of each media item in the library.

**Computer-Readable Medium for Generating an Ordered List of Media Items**

The present invention further comprises a computer-readable medium having computer-executable instructions for generating an ordered list of one or more media items selected from a library of media items. The computer-executable instructions for performing steps comprise (i) selecting a subgroup of media items from the library according to a user-associated selection filter and (ii) ordering at least a portion of the subgroup of media items into an ordered list according to a user-associated ordering filter. The computer-executable instructions may further comprise repeating at least one of the selecting and ordering in response to at least one of user selection of filter parameters and user behavior determining filter parameters.

**General Purpose Computing Device**

Fig. 3 shows one example of a general purpose computing device in the form of a computer 130. In one embodiment of the invention, a computer such as the computer 130 is suitable for use in the other figures illustrated and described herein. In one example, the system 31 discussed above may be embodied by computer 130. Computer 130 additionally has one or more processors or processing units 132 and a system memory 134. In one example, the playlist engine 35 for generating an ordered list of media items discussed above may be embodied by processors or processing units 132. In the illustrated embodiment, a system bus 136 couples various system components including the system memory 134 to the processors 132. The bus 136 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 130 typically has at least some form of computer readable media. Computer readable media, which include both volatile and nonvolatile media, removable and non-removable media, may be any available medium that can be accessed by computer 130. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. In one example, computer storage media include RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium that can be used to store the desired information and that can be accessed by computer 130. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Wired media, such as a wired network or direct-wired connection, and wireless media, such as acoustic, RF, infrared, and other wireless media, are examples of communication media. Combinations of the any of the above are also included within the scope of computer readable media.

The system memory 134 includes computer storage media in the form of removable and/or non-removable, volatile and/or nonvolatile memory. In the illustrated embodiment, system memory 134 includes read only memory (ROM) 138 and random access memory (RAM) 140. A basic input/output system 142 (BIOS), containing the basic routines that help to transfer information between elements within computer 130, such as during start-up, is typically stored in ROM 138. RAM 140 typically contains data and/or program modules that are immediately accessible to and/or presently being operated on by processing unit 132. By way of example, and not limitation, Fig. 3 illustrates operating system 144, application programs 146, other program modules 148, and program data 150.

The computer 130 may also include other removable/non-removable, volatile/nonvolatile computer storage media. In one example, Fig. 3 illustrates a hard disk drive 154 that reads from or writes to non-removable, nonvolatile magnetic media. Fig. 3 also shows a magnetic disk drive 156 that reads from or writes to a removable, nonvolatile magnetic disk 158, and an optical disk drive 160 that reads from or writes to a removable, nonvolatile optical disk 162 such as a CD-ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 154, and magnetic disk drive 156 and optical disk drive 160 are typically connected to the system bus 136 by a non-volatile memory interface, such as interface 166.

The drives or other mass storage devices and their associated computer storage media discussed above and illustrated in Fig. 3, provide storage of computer readable instructions, data structures, program modules and other data for the computer 130. In Fig. 3, for example, hard disk drive 154 is illustrated as storing operating system 170, application programs 172, other program modules 174, and program data 176. Note that these components can either be the same as or different from operating system 144, application programs 146, other program modules 148, and program data 150. Operating system 170, application programs 172, other program modules 174, and program data 176 are given different numbers here to illustrate that, at a minimum, they are different copies.

A user may enter commands and information into computer 130 through input devices or user interface selection devices such as a keyboard 180 and a pointing device 182 (e.g., a mouse, trackball, pen, or touch pad). Other input devices (not shown) may include a microphone, joystick, game pad, camera, scanner, or the like. These and other input devices are connected to processing unit 132 through a user input interface 184 that is coupled to system bus 136, but may be connected by other interface and bus structures, such as a parallel port, game port, or a Universal Serial Bus (USB). A monitor 188 or other type of display device is also connected to system bus 136 via an interface, such as a video interface 190. In addition to the monitor 188, computers often include other peripheral output devices (not shown) such as a printer and speakers, which may be connected through an output peripheral interface (not shown). In one example, the user interface 25 discussed above may be embodied by such input devices and monitors.

The computer 130 may operate in a networked environment using logical connections to one or more remote computers, such as a remote computer 194. The remote computer 194 may be a personal computer, a server, a router, a network PC, a peer device or other common network node, and typically includes many or all of the elements described above relative to computer 130. The logical connections depicted in Fig. 3 include a local area network (LAN) 196 and a wide area network (WAN) 198, but may also include other networks. LAN 136 and/or WAN 138 can be a wired network, a wireless network, a combination thereof, and so on. Such networking environments are commonplace in offices, enterprise-wide computer networks, intranets, and global computer networks (e.g., the Internet).

When used in a local area networking environment, computer 130 is connected to the LAN 196 through a network interface or adapter 186. When used in a wide area networking environment, computer 130 typically includes a modem 178 or other means for establishing communications over the WAN 198, such as the Internet. The modem 178, which may be internal or external, is connected to system bus 136 via the user input interface 184, or other appropriate mechanism. In a networked environment, program modules depicted relative to computer 130, or portions thereof, may be stored in a remote memory storage device (not shown). By way of example, and not limitation, Fig. 3 illustrates remote application programs 192 as residing on the memory device. It will be appreciated that the network connections shown are exemplary and other means of establishing a communications link between the computers may be used.

Generally, the data processors of computer 130 are programmed by means of instructions stored at different times in the various computer-readable storage media of the computer. Programs and operating systems are typically distributed, in one example, on floppy disks or CD-ROMs. From there, they are installed or loaded into the secondary memory of a computer. At execution, they are loaded at least partially into the computer's primary electronic memory. The invention described herein includes these and other various types of computer-readable storage media when such media contain instructions or programs for implementing the operations described below in conjunction with a microprocessor or other data processor.

For purposes of illustration, programs and other executable program components, such as the operating system, are illustrated herein as discrete blocks. It is recognized, however, that such programs and components reside at various times in different storage components of the computer, and are executed by the data processor(s) of the computer.

Although described in connection with an exemplary computing system environment, including computer 130, the invention is operational with numerous other general purpose or special purpose computing system environments or configurations. The computing system environment is not intended to suggest any limitation as to the scope of use or functionality of the invention. Moreover, the computing system environment should not be interpreted as having any dependency or requirement relating to any one or combination of components illustrated in the exemplary operating environment. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

In operation, computer 130 executes a method such as described above for generating an ordered list of one or more media items selected from a library of media items. The computer 130 (or its components) selects a subgroup of media items from the library according to a user-associated selection filter. The computer 130 orders at least a portion of the subgroup of media items into an ordered list according to a user-associated ordering filter.

Those skilled in the art will note that the order of execution or performance of the methods illustrated and described herein is not essential, unless otherwise specified. That is, it is contemplated by the inventors that elements of the methods may be performed in any order, unless otherwise specified, and that the methods may include more or less elements than those disclosed herein.

When introducing elements of the present invention or the embodiment(s) thereof, the articles "a," "an," "the," and "said" are intended to mean that there are one or more of the elements. The terms "comprising," "including," and "having" are intended to be inclusive and mean that there may be additional elements other than the listed elements.

In view of the above, it will be seen that the several objects of the invention are achieved and other advantageous results attained.

As various changes could be made in the above products and methods without departing from the scope of the invention, it is intended that all matter contained in the above description and shown in the accompanying drawings shall be interpreted as illustrative and not in a limiting sense.

**Claims**

1. A system for generating an ordered list of one or more media items selected from a library of media items, said system comprising:

   a user-associated selection filter for generating a subgroup of media items from the library; and
   a user-associated ordering filter for ordering at least a portion of the subgroup of media items into an ordered list.

2. The system of claim 1 wherein each of said user-associated filters is configured as a function of at least one of user selection of filter parameters, and
   user behavior determining filter parameters.

3. The system of claim 2 wherein said user behavior comprises user actions relating to at least one of selecting, accessing, and playing the media items.

4. The system of claim 1 wherein said system further comprises a data source containing said library of media items.

5. The system of claim 1 wherein said ordered list is an "Up Next" playlist.

6. The system of claim 1 wherein each of said user-associated selection filter and said user-associated ordering filter comprises two or more filters, wherein each of said two or more filters is assigned a weight such that each of said two or more filters impacts the filtering of the media items according to its relative weight.

7. The system of claim 6 wherein said two or more filters of the user-associated selection filter score each media item of the library according to the weighted filters, whereby the subgroup is generated based upon the score of each media item in the library.

8. The system of claim 7 wherein each of the media items of the library is assigned a centile ranking based upon its weighted score.

9. The system of claim 8 whereby a highest scoring media item is awarded a centile score of 100, a lowest scoring media item is awarded a score of zero, and each of the remaining media items is awarded a centile score evenly distributed between the highest scoring media item and the lowest scoring media item based upon its weighted score.

10. The system of claim 7 wherein said two or more filters of the user-associated ordering filter score each media item of the subgroup according to the weighted filters, whereby the media items of the subgroup are arranged in an ordered list based upon the score of each media item in the subgroup.

11. The system of claim 1 wherein said user-associated selection filter comprises at least one of:

    a null filter,
    a content filter, and
    a frequency filter.

12. The system of claim 1 wherein said user-associated ordering filter comprises at least one of:

    a null filter,
    a media item matching filter, and
    a listening experience filter.

**13.** The system of claim 1 wherein the filters are adapted to continuously regenerate the subgroup and continuously reorder at least a portion of the subgroup while at least one of the media items in the ordered subgroup is accessed by a user.

**14.** A method for generating an ordered list of one or more media items selected from a library of media items, said method comprising:

selecting a subgroup of media items from the library according to a user-associated selection filter; and
ordering at least a portion of the subgroup of media items into an ordered list according to a user-associated ordering filter.

**15.** The method of claim 14 further comprising configuring each of said filters as a function of at least one of user selection of filter parameters and user behavior determining filter parameters.

**16.** The method of claim 15 further comprising repeating at least one of said selecting and ordering in response to at least one of user selection of filter parameters and user behavior determining filter parameters.

**17.** The method of claim 14 wherein each of said user-associated selection filter and said user-associated ordering filter comprises two or more filters, and wherein each of said selecting and ordering comprises:

filtering each of the media items with said two or more filters;
assigning a weight to each of said two or more filters; and
scoring each media item of the library according to the weighted filters, whereby the subgroup is generated based upon the score of each media item in the library.

**18.** The method of claim 14 further comprising displaying at least a portion of said ordered list on a user interface.

**19.** A computer-readable medium having computer-executable instructions for generating an ordered list of one or more media items selected from a library of media items, said computer-executable instructions for performing steps comprising:

selecting a subgroup of media items from the library according to a user-associated selection filter; and
ordering at least a portion of the subgroup of media items into an ordered list according to a user-associated ordering filter.

**20.** The computer-readable medium of claim 19 wherein said computer-executable instructions for performing steps further comprises,
repeating at least one of said selecting and ordering in response to at least one of user selection of filter parameters and user behavior determining filter parameters.

# FIG. 1

# FIG. 1A

25

| Rock | playlist title |

Unwell
Matchbox Twenty
More Than You Th

⊘ ☆ ☆ ☆ ☆ ☆

now playing

65

63

| Up Next | Green Eyes | Up Next |

61

Cochise (4:10)
Audioslave

Show Me How to L
Audioslave

Gasoline (3:48)
Audioslave

What You Are (4:3
Audioslave

Like a Stone (4:53)

playlist

235 songs, 3:15:01   total items, time

# FIG. 2

Rendered
Playlist
(all, unsorted) — 31

35

Playlist
Engine

Behavior Filter "Don't Ever Play" -- Weighting: 100

79

Behavior Filter "Play Less Songs that Sound like 'U2' " --
Weighting: 25

41

Shuffle Filter "Randomize" -- Weighting: 50

Shuffle Filter "Favor Favorites" -- Weighting: 80

79

Shuffle Filter "Not Recently Played" -- Weighting: 25

Suggested
Candidates Subgroup
(Filtered, Sorted) — 43

83

Crossfade Filter "Beat Match" -- Weighting: 50

45

CrossFade Filter "Follow with Different" -- Weighting: 75

"Up Next" and "Now Playing"
Playlists of Media Items — 49

# FIG. 3

EP 1 705 584 A1

SYSTEM MEMORY 134

(ROM) 138
BIOS 142

(RAM) 140
OPERATING SYSTEM 144
APPLICATION PROGRAMS 146
OTHER PROGRAM MODULES 148
PROGRAM DATA 150

PROCESSING UNIT 132

VIDEO INTERFACE 190

130

100

188

136 SYSTEM BUS

166
NON-VOL MEMORY INTERFACE

184
USER INPUT INTERFACE

NETWORK INTERFACE 186

LOCAL AREA NETWORK

154   156   160

158   162   176

182

180

178

196

194

198

WIDE AREA NETWORK

192

OPERATING SYSTEM 170
APPLICATION PROGRAMS 172
OTHER PROGRAM MODULES 174
PROGRAM DATA 176

REMOTE APPLICATION PROGRAMS

**EP 1 705 584 A1**

## EUROPEAN SEARCH REPORT

| | | Application Number |
| --- | --- | --- |
| | | EP 06 00 0633 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2004/254659 A1 (BOLAS MARK ET AL) 16 December 2004 (2004-12-16) * abstract * * figure 1 * * paragraph [0014] - paragraph [0032] * ----- | 1-20 | INV. G06F17/30 |
| X | US 2004/260786 A1 (BARILE STEVEN E) 23 December 2004 (2004-12-23) * abstract * * figures 1-3 * * paragraph [0017] - paragraph [0031] * ----- | 1-20 | |
| X | US 2003/028613 A1 (MORI ROBERT F) 6 February 2003 (2003-02-06) * abstract * * figure 1 * * paragraph [0014] - paragraph [0015] * ----- | 1-20 | |
| X | US 2004/002310 A1 (HERLEY CORMAC ET AL) 1 January 2004 (2004-01-01) * the whole document * ----- | 1-20 | TECHNICAL FIELDS SEARCHED (IPC)  G06F |

The present search report has been drawn up for all claims

| Place of search | Date of completion of the search | Examiner |
| --- | --- | --- |
| Munich | 26 July 2006 | Konak, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 00 0633

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2006

| Patent document cited in search report | | Publication date | Patent family member(s) | | Publication date |
|---|---|---|---|---|---|
| US 2004254659 | A1 | 16-12-2004 | NONE | | |
| US 2004260786 | A1 | 23-12-2004 | NONE | | |
| US 2003028613 | A1 | 06-02-2003 | NONE | | |
| US 2004002310 | A1 | 01-01-2004 | US 2005262528 | A1 | 24-11-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6545209 B